# EUROPEAN PATENT APPLICATION

(11) **EP 3 901 825 A2**
(43) Date of publication of application: **27.10.2021**
(21) Application number: 21189563.6
(22) Date of filing: 04.08.2021
(51) Int. Cl.: G06K 9/00

(54) **METHOD AND APPARATUS FOR TRAINING MODEL, METHOD AND APPARATUS FOR PREDICTING MINERAL, DEVICE, AND STORAGE MEDIUM**

(30) Priority: 22.01.2021 CN 202110090431
(71) Applicant: Beijing Baidu Netcom Science and Technology Co., Ltd., Beijing 100085 (CN)
(72) Inventor: JIA, Zhuang, Beijing, 100085 (CN); LONG, Xiang, Beijing, 100085 (CN); ZHENG, Honghui, Beijing, 100085 (CN); PENG, Yan, Beijing, 100085 (CN); FENG, Yuan, Beijing, 100085 (CN); ZHANG, Bin, Beijing, 100085 (CN); WANG, Xiaodi, Beijing, 100085 (CN); YUAN, Pengcheng, Beijing, 100085 (CN); XIN, Ying, Beijing, 100085 (CN); HAN, Shumin, Beijing, 100085 (CN)
(74) Representative: V.O.

(57) **Abstract**

The present disclosure discloses a method and apparatus for training a model, a method and apparatus for predicting a mineral, a device and a storage medium, and relates to the fields of computer vision and deep learning technologies. An implementation of the method may include: acquiring a target hyperspectral image of a target area, the target hyperspectral image including at least one pixel point annotated with a mineral category; determining a mask image corresponding to the target hyperspectral image; determining a sample hyperspectral image according to the target hyperspectral image and the mask image; determining an annotation vector of each pixel point according to the at least one pixel point annotated with the mineral category; and training a model according to the sample hyperspectral image and the annotation vector of the each pixel point.

## Description

### TECHNICAL FIELD

The present disclosure relates to the field of computer technology, particularly to the fields of computer vision and deep learning technologies, and more particularly to a method and apparatus for training a model, a method and apparatus for predicting a mineral, a device and a storage medium.

### BACKGROUND

Mineral exploration occupies an important position in the development of national economy and industrialization. The purpose of the mineral exploration is to investigate the geological types and properties in a certain area, so as to ascertain the quality and distribution of minerals.

Hyperspectral imaging has advantages of wide coverage, non-contact measurement, high security and low cost. Since minerals and rocks that have different proportions of elements may show different characteristics in an electromagnetic spectrum, the hyperspectral imaging is directive to the study and determination on the kinds, distributions and magnitudes of minerals in the shallow subsurface. People may use hyperspectral images to perform a prediction and an evaluation on the kinds and distributions of minerals in the shallow subsurface within a large area in combination with a small number of manually surveyed actual samples and using a machine learning method and a deep learning method, thereby reducing the cost of manual exploration and improving the exploration efficiency.

### SUMMARY

A method and apparatus for training a model, a method and apparatus for predicting a mineral, a device and a storage medium are provided.

According to a first aspect, some embodiments of the present disclosure provide a method for training a model. The method includes: acquiring a target hyperspectral image of a target area, the target hyperspectral image including at least one pixel point annotated with a mineral category; determining a mask image corresponding to the target hyperspectral image; determining a sample hyperspectral image based on the target hyperspectral image and the mask image; determining annotation vectors of pixel points in the at least one pixel point based on the at least one pixel point annotated with the mineral category; and training a model based on the sample hyperspectral image and the annotation vectors of the pixel points.

According to a second aspect, some embodiments of the present disclosure provide a method for predicting a mineral. The method includes: acquiring a to-be-predicted hyperspectral image of a to-be-predicted area; and predicting a mineral category included in the to-be-predicted area based on the to-be-predicted hyperspectral image and the model trained and obtained through the method according to the first aspect.

According to a third aspect, some embodiments of the present disclosure provide an apparatus for training a model. The apparatus includes: a first acquiring unit, configured to acquire a target hyperspectral image of a target area, the target hyperspectral image including at least one pixel point annotated with a mineral category; a mask determining unit, configured to determine a mask image corresponding to the target hyperspectral image; a sample determining unit, configured to determine a sample hyperspectral image based on the target hyperspectral image and the mask image; a vector determining unit, configured to determine annotation vectors of pixel points in the at least one pixel point based on the at least one pixel point annotated with the mineral category; and a model training unit, configured to train a model based on the sample hyperspectral image and the annotation vectors of the pixel points.

According to a fourth aspect, some embodiments of the present disclosure provide an apparatus for predicting a mineral. The apparatus includes: a second acquiring unit, configured to acquire a to-be-predicted hyperspectral image of a to-be-predicted area; and a mineral predicting unit, configured to predict a mineral category included in the to-be-predicted area based on the to-be-predicted hyperspectral image and the model trained and obtained through the method according to the first aspect.

According to a fifth aspect, some embodiments of the present disclosure provide an electronic device for performing a method for training a model. The electronic device includes: at least one processor; and a storage device, communicated with the at least one processor, where the storage device stores an instruction executable by the at least one processor, and the instruction is executed by the at least one processor, to enable the at least one processor to perform the method according to the first aspect.

According to a sixth aspect, some embodiments of the present disclosure provide an electronic device for performing a method for predicting a mineral. The electronic device includes at least one processor; and a storage device, communicated with the at least one processor, where the storage device stores an instruction executable by the at least one processor, and the instruction is executed by the at least one processor, to enable the at least one processor to perform the method according to the second aspect.

According to a seventh aspect, some embodiments of the present disclosure provide a non-transitory computer readable storage medium, storing a computer instruction, wherein the computer instruction is used to cause a processor to perform the method according to the first aspect or the method according to the second aspect.

According to an eighth aspect, some embodiments of the present disclosure provide a computer program product, comprising a computer program, wherein the computer program, when executed by a processor, implements the method according to the first aspect or the method according to the second aspect.

According to the technology of the present disclosure, a method for predicting a mineral by using a deep learning technology is provided, which improves the efficiency of the mineral exploration and ensures the spatial continuity of the prediction result of the model.

### BRIEF DESCRIPTION OF THE DRAWINGS

The accompanying drawings are used for a better understanding of the scheme, and do not constitute a limitation to embodiments of the present disclosure. Here:
Fig. 1 is a diagram of an exemplary system architecture in which an embodiment of the present disclosure may be applied;
Fig. 2 is a flowchart of a method for training a model according to an embodiment of the present disclosure;
Fig. 3 is a flowchart of the method for training a model according to another embodiment of the present disclosure;
Fig. 4 is a flowchart of a method for predicting a mineral according to an embodiment of the present disclosure;
Fig. 5 is a schematic diagram of an application scenario of the method for training a model and the method for predicting a mineral according to an embodiment of the present disclosure;
Fig. 6 is a schematic structural diagram of an apparatus for training a model according to an embodiment of the present disclosure;
Fig. 7 is a schematic structural diagram of an apparatus for predicting a mineral according to an embodiment of the present disclosure; and
Fig. 8 is a block diagram of an electronic device used to implement the method for training a model and the method for predicting a mineral according to embodiments of the present disclosure.

### DETAILED DESCRIPTION OF EMBODIMENTS

Embodiments of present disclosure will be described below in detail with reference to the accompanying drawings. It should be appreciated that the specific embodiments described herein are merely used for explaining the relevant disclosure, rather than limiting the disclosure. In addition, it should be noted that, for the ease of description, only the parts related to the relevant disclosure are shown in the accompanying drawings.

It should also be noted that the some embodiments in the present disclosure and some features in the disclosure may be combined with each other on a non-conflict basis. Features of the present disclosure will be described below in detail with reference to the accompanying drawings and in combination with embodiments.

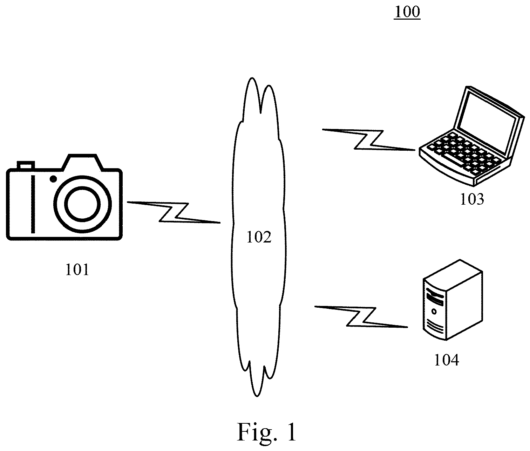

Fig. 1 illustrates an exemplary system architecture 100 in which a method for training a model, a method for predicting a mineral, an apparatus for training a model or an apparatus for predicting a mineral according to embodiments of the present disclosure may be applied.

As shown in Fig. 1, the system architecture 100 may include an image collection device 101, a network 102, a terminal device 103 and a server 104. The image collection device 101 is used to collect a hyperspectral image of a target area and send the collected hyperspectral image to the terminal device 103 or the server 104 via the network 102. The network 102 serves as a medium providing a communication link between the image collection device 101 and the terminal device 103 and the server 104. The network 102 may include various types of connections, for example, wired or wireless communication links, or optical fiber cables.

A user may process, by using the terminal device 103, the hyperspectral image collected by the image collection device 101, to obtain a trained model or a mineral prediction result. Various communication client applications (e.g., an image processing application) may be installed on the terminal device 103.

The terminal device 103 may be hardware or software. When being the hardware, the terminal device 103 may be various electronic devices, the electronic devices including, but not limited to, a laptop portable computer, a desktop computer, and the like. When being the software, the terminal device 103 may be installed in the above listed electronic devices. The terminal device may be implemented as a plurality of pieces of software or a plurality of software modules (e.g., software or software modules for providing a distributed service), or as a single piece of software or a single software module, which will not be specifically defined here.

The server 104 may be a server providing various services. For example, the server 104 may be a backend server providing a mineral prediction model to the terminal device 103. The backend server may train a model using a training sample, to obtain the mineral prediction model, and feed back the obtained mineral prediction model to the terminal device 103.

It should be noted that the server 104 may be hardware or software. When being the hardware, the server 104 may be implemented as a distributed server cluster composed of a plurality of servers, or may be implemented as a single server. When being the software, the server 104 may be implemented as a plurality of pieces of software or a plurality of software modules (e.g., software or software modules for providing a distributed service), or may be implemented as a single piece of software or a single software module, which will not be specifically defined here.

It should also be noted that the method for training a model provided in embodiments of the present disclosure may be performed by the terminal device 103 or the server 104, and the method for predicting a mineral may also be performed by the terminal device 103 or the server 104. Correspondingly, the apparatus for training a model and the apparatus for predicting a mineral may be provided in the server 104.

It should be appreciated that the numbers of the terminal devices, the networks, and the servers in Fig. 1 are merely illustrative. Any number of terminal devices, networks, and servers may be provided based on actual requirements.

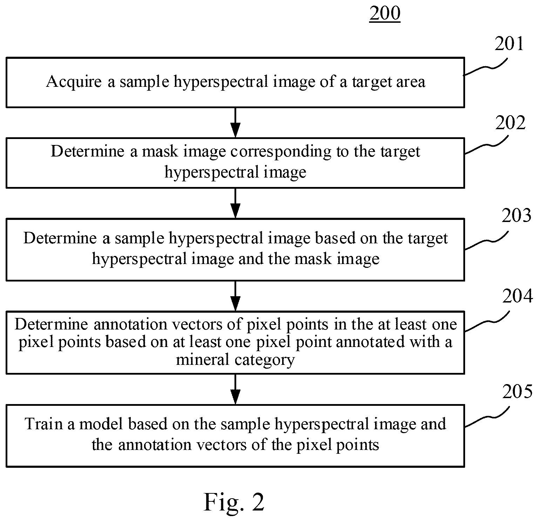

Further referring to Fig. 2, Fig. 2 illustrates a flow 200 of a method for training a model according to an embodiment of the present disclosure. The method for training a model in this embodiment includes the following steps:
Step 201, acquiring a target hyperspectral image of a target area.

In this embodiment, an executing body (e.g., the terminal device 103 or the server 104 shown in Fig. 1) of the method for training a model may acquire the target hyperspectral image of the target area in various ways. The target hyperspectral image may be collected and obtained by an image collection apparatus though various ways. For example, the target hyperspectral image may be collected and obtained by an image collection apparatus carried by an unmanned aerial vehicle. The target area may refer to various areas to be explored, for example, a certain mountain area. The target hyperspectral image includes a plurality of pixel points, and at least one pixel point has been annotated with a mineral category. The mineral category may refer to any one of the categories of various proven minerals, and may be represented using a corresponding identifier.

Step 202, determining a mask image corresponding to the target hyperspectral image.

After determining the target hyperspectral image, the executing body may determine a corresponding mask image. The size of the above mask image may be the same as that of the target hyperspectral image. The mask image may include a pixel point of which the pixel value is 0 or 1. Particularly, the executing body may select a plurality of pixel points from the above at least one pixel point annotated with a mineral category, and set the pixel values of the pixel points in the mask image which correspond to the selected pixel points to 1.

Step 203, determining a sample hyperspectral image based on the target hyperspectral image and the mask image.

The executing body may superimpose the target hyperspectral image and the mask image to obtain the sample hyperspectral image. It may be appreciated that each pixel point in the sample hyperspectral image is already annotated with a mineral category.

Step 204, determining annotation vectors of pixel points in the at least one pixel points based on at least one pixel point annotated with a mineral category.

The executing body may determine the annotation vector of each pixel point in the at least one pixel points based on each pixel point annotated with the mineral category. Each annotation vector may be composed of a plurality of numbers of values, and each of the values corresponds to a different mineral category. For each pixel point, if the pixel point is annotated with a mineral category, the annotated mineral category may be represented by "1" in the annotation vector of the pixel point. For example, the annotation vector includes three values, where (1, 0, 0) represents that the mineral category is a first category, (0, 1, 0) represents that the mineral category is a second category, and (0, 0, 1) represents that the mineral category is a third category. Alternatively, the executing body may perform various operations on the location of the each pixel point and the mineral category with which the each pixel point is annotated, to determine the annotation vector.

Step 205, training a model based on the sample hyperspectral image and the annotation vectors of the pixel points.

The executing body may train the model by using the sample hyperspectral image and the annotation vectors of the pixel points. Particularly, the executing body may use the sample hyperspectral image as the input of an initial model, and compare the output of the initial model with annotation vectors of the pixel points. Based on the comparison result, the parameter of the initial model is iteratively updated, thereby implementing the training on the model.

According to the method for training a model provided in the above embodiment of the present disclosure, the model may be trained by using a single sample hyperspectral image and the annotation of each pixel point in the image, thereby reducing the number of images required for the training of the model and improving the efficiency of the training of the model. In addition, the pixel points used in the training of the model are from the same area, that is, there is a spatial continuity between the pixel points. In this way, the spatial continuity of the prediction result of the model is also ensured.

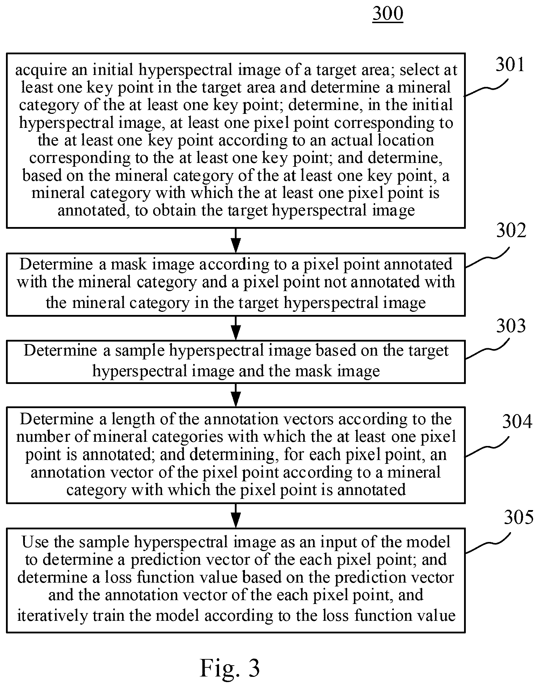

Referring to Fig. 3, Fig. 3 illustrates a flow 300 of a method for training a model according to another embodiment of the present disclosure. As shown in Fig. 3, the method in this embodiment may include the following steps:
Step 301, acquiring an initial hyperspectral image of a target area; selecting at least one key point in the target area and determining a mineral category of the at least one key point; determining, in the initial hyperspectral image, at least one pixel point corresponding to the at least one key point according to an actual location corresponding to the at least one key point; and determining, based on the mineral category of the at least one key point, a mineral category with which the at least one pixel point is annotated, to obtain the target hyperspectral image.

In this embodiment, the executing body may first acquire the initial hyperspectral image of the target area. The initial hyperspectral image may refer to a hyperspectral image which is collected by an image collection apparatus and on which none processing has been performed. The executing body may select at least one key point in the target area. The above at least one key point may refer to points scattered in the target area, and the above scattered points may refer to places where the terrain is relatively flat. Alternatively, the executing body may uniformly select, from the initial hyperspectral image, a plurality of points as key points. After determining the key points, the executing body sends the key points to a technician, and the technician may explore the mineral category of the above key points in the field. Then, according to the actual location corresponding to the above at least one key point, the executing body may determine at least one pixel point corresponding to the above at least one key point in the initial hyperspectral image. Particularly, the executing body may determine, based on an external parameter of the image collection apparatus, a transformation matrix from a geodetic coordinate system to an image coordinate system, thereby obtaining, in the initial hyperspectral image, the at least one pixel point corresponding to the key points. For each key point, the executing body may use the mineral category of the key point as the mineral category with which the corresponding pixel point is annotated.

Step 302, determining a mask image according to a pixel point annotated with the mineral category and a pixel point not annotated with the mineral category in the target hyperspectral image.

The pixel value corresponding to the pixel point annotated with the mineral category may be set as 1, and the pixel value corresponding to the pixel point not annotated with the mineral category may be set as 0.

Step 303, determining a sample hyperspectral image based on the target hyperspectral image and the mask image.

Step 304, determining a length of the annotation vectors according to the number of mineral categories with which the at least one pixel point is annotated; and determining, for each pixel point, an annotation vector of the pixel point according to a mineral category with which the pixel point is annotated.

After determining the mineral category with which the each pixel point is annotated, the executing body may count the number of the mineral categories with which the at least one pixel point is annotated. The above counted number is used as the length of the annotation vector. For each pixel point, the annotation vector of the pixel point is determined according to the mineral category with which the pixel point is annotated. For example, the annotation vector includes three values, for a pixel point annotated with a first category, the annotation vector of the pixel point is represented by (1, 0, 0); for a pixel point annotated with a second category, the annotation vector of the pixel point is represented by (0, 1, 0); for a pixel point annotated with a third category, the annotation vector of the pixel point is represented by (0, 0, 1).

Step 305, using the sample hyperspectral image as an input of the model to determine a prediction vector of the each pixel point; and determining a loss function value based on the prediction vector and the annotation vector of the each pixel point, and iteratively training the model according to the loss function value.

The executing body may use the sample hyperspectral image as the input and use the output of the model as a mineral prediction vector of each pixel point. Then, the loss function value is determined based on the prediction vector and the annotation vector of the each pixel point. Particularly, the executing body may substitute the prediction vector and the annotation vector of the each pixel point into a calculation formula of a loss function, to obtain the loss function value. The above loss function may refer to a cross entropy loss function, which may be represented as Loss CE = CrossEntropy(mask o P, Y). Here, mask represents a mask image, o represents a Hadamard multiplication, P represents a prediction vector, and Y represents an annotation vector. If the loss function value is greater than a preset threshold value, the parameter of the model is updated to continue the training. If the loss function value is less than the preset threshold value, it indicates that the accuracy of the model is high, and thus, the training on the model may be completed.

In some alternative implementations of this embodiment, a regularization term may be added to the loss function to avoid over-fitting, such that the probabilities that minerals in the neighboring space are predicted as the same category are as close as possible. The regularization term may include, but not limited to, laplacian regularization, TV regularization, and the like.

According to the method for training a model provided in the above embodiment of the present disclosure, the model may be trained using the mineral categories with which the plurality of key points in the target area are annotated, thereby reducing the amount of work in the training of the model.

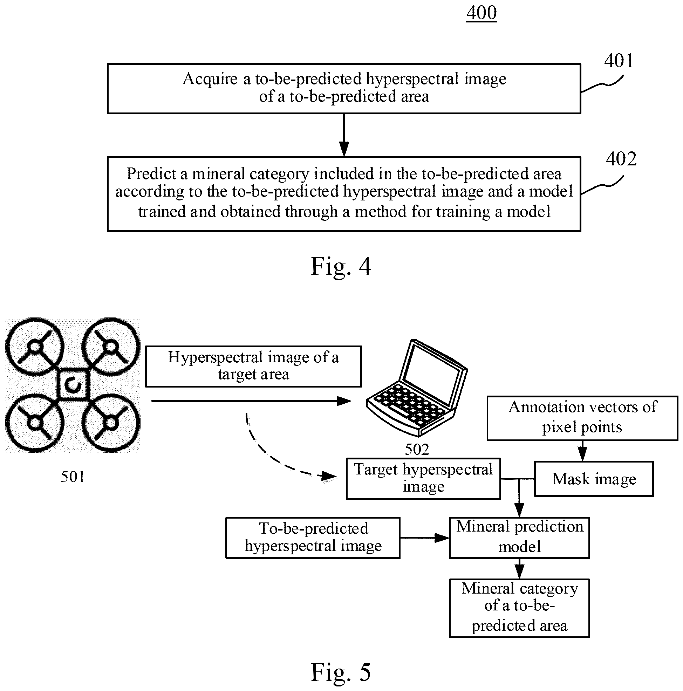

Fig. 4 illustrates a flow 400 of a method for predicting a mineral according to an embodiment of the present disclosure. As shown in Fig. 4, the method for predicting a mineral in this embodiment may include the following steps:
Step 401, acquiring a to-be-predicted hyperspectral image of a to-be-predicted area.

In this embodiment, an executing body may acquire a to-be-predicted hyperspectral image of the to-be-predicted area. The size of the to-be-predicted hyperspectral image may be the same as the size of the sample hyperspectral image in the embodiment shown in Fig. 2 or Fig. 3. The to-be-predicted area may be a target area, or may be another area.

Step 402, predicting a mineral category included in the to-be-predicted area according to the to-be-predicted hyperspectral image and a model trained and obtained through a method for training a model.

The executing body may input the to-be-predicted hyperspectral image into a model trained and obtained by using the embodiment shown in Fig. 2 or Fig. 3, and the obtained output is the prediction result for the mineral category in the to-be-predicted area.

In some alternative implementations of this embodiment, the executing body may count the areas having the same mineral category to obtain a statistical result, and display the statistical result to a user.

According to the method for predicting a mineral provided in the above embodiment of the present disclosure, the trained model may be utilized to perform the mineral prediction, thereby improving the efficiency of the mineral prediction.

Further referring to Fig. 5, Fig. 5 is a schematic diagram of an application scenario of the method for training a model and the method for predicting a mineral according to an embodiment of the present disclosure. In the application scenario of Fig. 5, an unmanned aerial vehicle 501 carries a camera to collect a hyperspectral image of a target area, and sends the collected hyperspectral image to a technician. The technician selects a plurality of key points from the hyperspectral image, explores mineral categories of the minerals at the plurality of key points in the field, and annotates, in the hyperspectral image, pixel points corresponding to the above plurality of key points with the explored mineral categories to obtain a target hyperspectral image. The above target hyperspectral image is inputted into a terminal 502, and the terminal 502 determines annotation vectors of the pixel points in the target hyperspectral image. A mask image is obtained according to the pixel points annotated with the mineral categories in the target hyperspectral image. The mask image and the target hyperspectral image are superimposed to obtain a sample hyperspectral image. Model training is performed using the sample hyperspectral image and the annotation vectors, to obtain a mineral prediction model. The technician may input a to-be-predicted hyperspectral image of a to-be-predicted area into the above mineral prediction model, to obtain the mineral category of the to-be-predicted area.

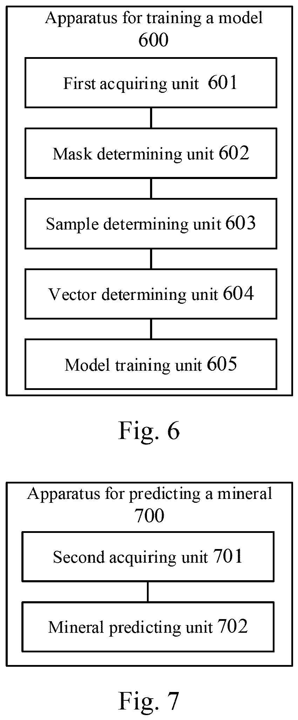

Further referring to Fig. 6, as an implementation of the method shown in the above drawings, an embodiment of the present disclosure provides an apparatus for training a model. The embodiment of the apparatus corresponds to the embodiment of the method shown in Fig. 2. The apparatus may be applied in various electronic devices.

As shown in Fig. 6, the apparatus 600 for training a model in this embodiment includes: a first acquiring unit 601, a mask determining unit 602, a sample determining unit 603, a vector determining unit 604 and a model training unit 605.

The first acquiring unit 601 is configured to acquire a target hyperspectral image of a target area, the target hyperspectral image including at least one pixel point annotated with a mineral category.

The mask determining unit 602 is configured to determine a mask image corresponding to the target hyperspectral image.

The sample determining unit 603 is configured to determine a sample hyperspectral image based on the target hyperspectral image and the mask image.

The vector determining unit 604 is configured to determine annotation vectors of pixel points in the at least one pixel point based on the at least one pixel point annotated with the mineral category.

The model training unit 605 is configured to train a model based on the sample hyperspectral image and the annotation vectors of the pixel points.

In some alternative implementations of this embodiment, the mask determining unit 602 may be further configured to: determine the mask image based on a pixel point annotated with the mineral category and a pixel point not annotated with the mineral category in the target hyperspectral image.

In some alternative implementations of this embodiment, the vector determining unit 604 is further configured to: determine a length of the annotation vectors according to the number of mineral categories with which the at least one pixel point is annotated; and determine, for a pixel point in the at least one pixel point, an annotation vector of the pixel point based on a mineral category with which the pixel point is annotated.

In some alternative implementations of this embodiment, the model training unit 605 may be further configured to: use the sample hyperspectral image as an input of the model to determine a prediction vector of the each pixel point; and determine a loss function value based on the prediction vector and an annotation vector of the each pixel point, and iteratively training the model according to the loss function value.

In some alternative implementations of this embodiment, the first acquiring unit 601 may be further configured to: acquire an initial hyperspectral image of the target area; select at least one key point in the target area and determine a mineral category of the at least one key point; determine, in the initial hyperspectral image, at least one pixel point corresponding to the at least one key point based on an actual location corresponding to the at least one key point; and determine, based on a mineral category of the at least one key point, the mineral category with which the at least one pixel point is annotated to obtain the target hyperspectral image.

It should be understood that the units 601-605 described in the apparatus 600 for training a model correspond to the steps in the method described with reference to Fig. 2, respectively. Thus, the above operations and features described for the method for training a model are also applicable to the apparatus 600 and the units contained therein, which will not be repeatedly described here.

Further referring to Fig. 7, as an implementation of the method shown in the above drawings, an embodiment of the present disclosure provides an apparatus for predicting a mineral. The embodiment of the apparatus corresponds to the embodiment of the method shown in Fig. 4. The apparatus may be applied in various electronic devices.

As shown in Fig. 7, the apparatus 700 for predicting a mineral in this embodiment includes: a second acquiring unit 701 and a mineral predicting unit 702.

The second acquiring unit 701 is configured to acquire a to-be-predicted hyperspectral image of a to-be-predicted area.

The mineral predicting unit 702 is configured to predict a mineral category included in the to-be-predicted area based on the to-be-predicted hyperspectral image and the model trained and obtained through the embodiment shown in Fig. 2 or Fig. 3.

It should be understood that the units 701-702 described in the apparatus 700 for predicting a mineral correspond to the steps in the method described with reference to Fig. 4, respectively. Thus, the above operations and features described for the method for predicting a mineral are also applicable to the apparatus 700 and the units contained therein, which will not be repeatedly described here.

According to an embodiment of the present disclosure, an embodiment of the present disclosure further provides an electronic device, a readable storage medium, and a computer program product.

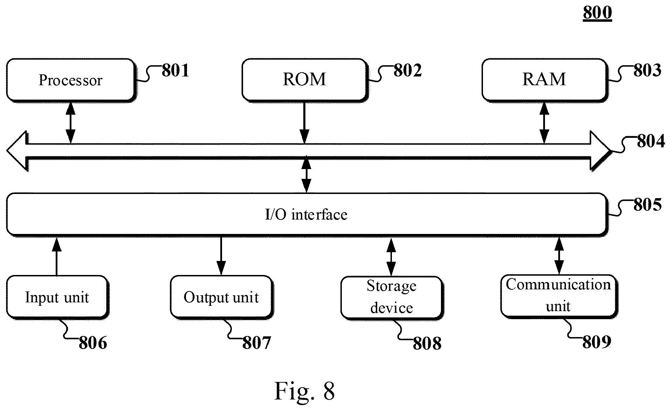

Fig. 8 is a block diagram of an electronic device 800 performing the method for training a model and the method for predicting a mineral according to embodiments of the present disclosure. The electronic device is intended to represent various forms of digital computers such as a laptop computer, a desktop computer, a workstation, a personal digital assistant, a server, a blade server, a mainframe computer, and other appropriate computers. The electronic device may also represent various forms of mobile apparatuses such as personal digital processing, a cellular telephone, a smart phone, a wearable device and other similar computing apparatuses. The parts shown herein, their connections and relationships, and their functions are only as examples, and not intended to limit implementations of the present disclosure as described and/or claimed herein.

As shown in Fig. 8, the electronic device 800 includes a processor 801, which may execute various appropriate actions and processes in accordance with a computer program stored in a read-only memory (ROM) 802 or a program loaded into a random access memory (RAM) 803 from a storage device 808. The RAM 803 also stores various programs and data required by operations of the device 600. The processor 801, the ROM 802 and the RAM 803 are connected to each other through a bus 804. An input/output (I/O) interface 805 is also connected to the bus 804.

The following components in the device 800 are connected to the I/O interface 805: an input unit 806, for example, a keyboard and a mouse; an output unit 807, for example, various types of displays and a speaker; the storage device 808, for example, a magnetic disk and an optical disk; and a communication unit 809, for example, a network card, a modem, a wireless communication transceiver. The communication unit 809 allows the device 800 to exchange information/data with an other device through a computer network such as the Internet and/or various telecommunication networks.

The processor 801 may be various general-purpose and/or special-purpose processing assemblies having processing and computing capabilities. Some examples of the processor 801 include, but not limited to, a central processing unit (CPU), a graphics processing unit (GPU), various dedicated artificial intelligence (AI) computing chips, various processors that run a machine learning model algorithm, a digital signal processor (DSP), any appropriate processor, controller and microcontroller, etc. The processor 801 performs the various methods and processes described above, for example, the method for training a model and the method for predicting a mineral. For example, in some embodiments, the method for training a model may be implemented as a computer software program, which is tangibly included in a machine readable medium, for example, the storage device 808. In some embodiments, part or all of the computer program may be loaded into and/or installed on the device 800 via the ROM 802 and/or the communication unit 809. When the computer program is loaded into the RAM 803 and executed by the processor 801, one or more steps of the above method for training a model and the method for predicting a mineral may be performed. Alternatively, in other embodiments, the processor 801 may be configured to perform the method for training a model and the method for predicting a mineral through any other appropriate approach (e.g., by means of firmware).

The various implementations of the systems and technologies described herein may be implemented in a digital electronic circuit system, an integrated circuit system, a field programmable gate array (FPGA), an application specific integrated circuit (ASIC), an application specific standard product (ASSP), a system-on-chip (SOC), a complex programmable logic device (CPLD), computer hardware, firmware, software and/or combinations thereof. The various implementations may include: being implemented in one or more computer programs, where the one or more computer programs may be executed and/or interpreted on a programmable system including at least one programmable processor, and the programmable processor may be a specific-purpose or general-purpose programmable processor, which may receive data and instructions from a storage system, at least one input device and at least one output device, and send the data and instructions to the storage system, the at least one input device and the at least one output device.

Program codes used to implement the method of embodiments of the present disclosure may be written in any combination of one or more programming languages. The above program codes may be packaged into a computer program product. These program codes may be provided to a processor or controller of a general-purpose computer, specific-purpose computer or other programmable data processing apparatus, so that the program codes, when executed by the processor 801, cause the functions or operations specified in the flowcharts and/or block diagrams to be implemented. These program codes may be executed entirely on a machine, partly on the machine, partly on the machine as a stand-alone software package and partly on a remote machine, or entirely on the remote machine or a server.

In the context of the present disclosure, the machine-readable medium may be a tangible medium that may include or store a program for use by or in connection with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any appropriate combination thereof. A more specific example of the machine-readable storage medium may include an electronic connection based on one or more lines, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any appropriate combination thereof.

To provide interaction with a user, the systems and technologies described herein may be implemented on a computer having: a display device (such as a CRT (cathode ray tube) or LCD (liquid crystal display) monitor) for displaying information to the user; and a keyboard and a pointing device (such as a mouse or a trackball) through which the user may provide input to the computer. Other types of devices may also be used to provide interaction with the user. For example, the feedback provided to the user may be any form of sensory feedback (such as visual feedback, auditory feedback or tactile feedback); and input from the user may be received in any form, including acoustic input, speech input or tactile input.

The systems and technologies described herein may be implemented in: a computing system including a background component (such as a data server), or a computing system including a middleware component (such as an application server), or a computing system including a front-end component (such as a user computer having a graphical user interface or a web browser through which the user may interact with the implementations of the systems and technologies described herein), or a computing system including any combination of such background component, middleware component or front-end component. The components of the systems may be interconnected by any form or medium of digital data communication (such as a communication network). Examples of the communication network include a local area network (LAN), a wide area network (WAN), and the Internet.

A computer system may include a client and a server. The client and the server are generally remote from each other, and generally interact with each other through the communication network. A relationship between the client and the server is generated by computer programs running on a corresponding computer and having a client-server relationship with each other.

It should be appreciated that the steps of reordering, adding or deleting may be executed using the various forms shown above. For example, the steps described in embodiments of the present disclosure may be executed in parallel or sequentially or in a different order, so long as the expected results of the technical schemas provided in embodiments of the present disclosure may be realized, and no limitation is imposed herein.

The above specific implementations are not intended to limit the scope of the present disclosure. It should be appreciated by those skilled in the art that various modifications, combinations, sub-combinations, and substitutions may be made depending on design requirements and other factors. Any modification, equivalent and modification that fall within the spirit and principles of the present disclosure are intended to be included within the scope of the present disclosure.

## Claims

1. A method for training a model, comprising:
acquiring (201) a target hyperspectral image of a target area, the target hyperspectral image including at least one pixel point annotated with a mineral category;
determining (202) a mask image corresponding to the target hyperspectral image;
determining (203, 303) a sample hyperspectral image based on the target hyperspectral image and the mask image;
determining (204) annotation vectors of pixel points in the at least one pixel point based on the at least one pixel point annotated with the mineral category; and
training (205) a model based on the sample hyperspectral image and the annotation vectors of the pixel points.

2. The method according to claim 1, wherein the determining (202) a mask image corresponding to the target hyperspectral image comprises:
determining (303) the mask image based on a pixel point annotated with the mineral category and a pixel point not annotated with the mineral category in the target hyperspectral image.

3. The method according to any one of the preceding claims, wherein the determining (204) annotation vectors of pixel points in the at least one pixel point based on the at least one pixel point annotated with the mineral category comprises:
determining (304) a length of the annotation vectors according to a number of mineral categories with which the at least one pixel point is annotated; and
determining (304), for a pixel point in the at least one pixel point, an annotation vector of the pixel point based on a mineral category with which the pixel point is annotated.

4. The method according to any one of the preceding claims, wherein the training (205) a model based on the sample hyperspectral image and the annotation vectors of the pixel points comprises:
using (305) the sample hyperspectral image as an input of the model to determine a prediction vector of the each pixel point; and
determining (305) a loss function value based on the prediction vector and an annotation vector of the each pixel point, and iteratively training the model according to the loss function value.

5. The method according to any one of the preceding claims, wherein the acquiring (201) a target hyperspectral image of a target area comprises:
acquiring (301) an initial hyperspectral image of the target area;
selecting (301) at least one key point in the target area and determining a mineral category of the at least one key point;
determining (301), in the initial hyperspectral image, at least one pixel point corresponding to the at least one key point based on an actual location corresponding to the at least one key point; and
determining (301), based on a mineral category of the at least one key point, the mineral category with which the at least one pixel point is annotated to obtain the target hyperspectral image.

6. A method for predicting a mineral, comprising:
acquiring (401) a to-be-predicted hyperspectral image of a to-be-predicted area; and
predicting (404) a mineral category included in the to-be-predicted area based on the to-be-predicted hyperspectral image and the model trained and obtained through the method according to claims 1-5.

7. An apparatus for training a model, comprising:
a first acquiring unit (601), configured to acquire a target hyperspectral image of a target area, the target hyperspectral image including at least one pixel point annotated with a mineral category;
a mask determining unit (602), configured to determine a mask image corresponding to the target hyperspectral image;
a sample determining unit (603), configured to determine a sample hyperspectral image based on the target hyperspectral image and the mask image;
a vector determining unit (604), configured to determine annotation vectors of pixel points in the at least one pixel point based on the at least one pixel point annotated with the mineral category; and
a model training unit (605), configured to train a model based on the sample hyperspectral image and the annotation vectors of the pixel points.

8. The apparatus according to claim 7, wherein the mask determining unit (602) is further configured to:
determine the mask image based on a pixel point annotated with the mineral category and a pixel point not annotated with the mineral category in the target hyperspectral image.

9. The apparatus according to any one of claims 7-8, wherein the vector determining unit (604) is further configured to:
determine a length of the annotation vectors according to a number of mineral categories with which the at least one pixel point is annotated; and
determine, for a pixel point in the at least one pixel point, an annotation vector of the pixel point based on a mineral category with which the pixel point is annotated.

10. The apparatus according to any one of claims 7-9, wherein the model training unit (605) is further configured to:
use the sample hyperspectral image as an input of the model to determine a prediction vector of the each pixel point; and
determine a loss function value based on the prediction vector and an annotation vector of the each pixel point, and iteratively training the model according to the loss function value.

11. The apparatus according to any one of claims 7-10, wherein the first acquiring unit (601) is further configured to:
acquire an initial hyperspectral image of the target area;
select at least one key point in the target area and determine a mineral category of the at least one key point;
determine, in the initial hyperspectral image, at least one pixel point corresponding to the at least one key point based on an actual location corresponding to the at least one key point; and
determine, based on a mineral category of the at least one key point, the mineral category with which the at least one pixel point is annotated to obtain the target hyperspectral image.

12. An apparatus for predicting a mineral, comprising:
a second acquiring unit (701), configured to acquire a to-be-predicted hyperspectral image of a to-be-predicted area; and
a mineral predicting unit (702), configured to predict a mineral category included in the to-be-predicted area based on the to-be-predicted hyperspectral image and the model trained and obtained through the method according to claims 1-5.

13. An electronic device for performing a method for training a model, the electronic device comprising:
at least one processor; and
a storage device, communicated with the at least one processor,
wherein the storage device stores an instruction executable by the at least one processor, and the instruction is executed by the at least one processor, to enable the at least one processor to perform the method according to any one of claims 1-5 or the method according to claim 6.

14. A non-transitory computer readable storage medium, storing a computer instruction, wherein the computer instruction is used to cause a processor to perform the method according to any one of claims 1-5 or the method according to claim 6.

15. A computer program product, comprising a computer program, wherein the computer program, when executed by a processor, implements the method according to any one of claims 1-5 or the method according to claim 6.
